# EUROPÄISCHE PATENTANMELDUNG

(11) **EP 1 095 854 A1**
(43) Veröffentlichungstag der Anmeldung: **02.05.2001**
(21) Anmeldenummer: 00122889.9
(22) Anmeldetag: 20.10.2000
(51) Int. Cl.: B65B 5/10, B65B 5/08, B65B 35/46, B65G 29/02

(54) **Vorrichtung zum Einbringen von Beuteln in eine Umverpackung**

(30) Priorität: 28.10.1999 DE 19952009
(71) Anmelder: INDAG GESELLSCHAFT FÜR INDUSTRIEBEDARF MBH & CO. BETRIEBS KG, 69020 Heidelberg (DE)
(72) Erfinder: Wild, Hans Peter, Dr., 6300 Zug (CH); Kraft, Eberhard, 74924 Neckarbischofsheim (DE)
(74) Vertreter: Grünecker, Kinkeldey, Stockmair & Schwanhäusser Anwaltssozietät

(57) **Zusammenfassung**

Es wird eine Vorrichtung zum Einbringen einer Mehrzahl von Beuteln (2), insbesondere von mit einem Getränk gefüllten Standbodenbeuteln, in eine Umverpackung (3) beschrieben. Die Vorrichtung enthält einen Beutelförderer (4) und einen Zufuhrförderer (10) für die Umverpackung (3), wobei die Beutel (2) an einer sich oberhalb des Zufuhrförderers befindenden Einbringstelle (16) unter Schwerkrafteinfluss in die Umverpackung einbringbar sind. Um eine derartige Vorrichtung noch weiter zu verbessern, um die Fördergeschwindigkeit zu erhöhen, wird vorgeschlagen, dass der Beutelförderer (4) einen um eine im wesentlichen horizontale Achse (12) drehbaren Sternförderer (8,9) aufweist, der mit umfangsseitig be- und entladbaren, sowie in Förderrichtung nur einen einzelnen Beutel aufnehmenden Aufnahmeabteilen (13) versehen und oberhalb des Zufuhrförderers (10) an der Einbringstelle (16) die gleiche Förderrichtung (B,C) wie der Zufuhrförderer (10) aufweist.

## Beschreibung

Die Erfindung bezieht sich auf eine Vorrichtung zum Einbringen von Beuteln in eine Umverpackung der im Oberbegriff des Anspruchs 1 erläuterten Art.

Eine derartige Vorrichtung ist der DE 197 45 854 C1 zu entnehmen. Die bekannte Vorrichtung enthält einen endlos umlaufenden Kreisförderer für die Beutel und einen als Linearförderer ausgebildeten Zufuhrförderer für die Umverpackung, der unterhalb des Kreisförderers angeordnet ist und die Förderrichtung des Kreisförderers an zwei diametral entgegengesetzten Einbringstellen schneidet. Der Kreisförderer enthält eine Vielzahl sich quer zur Förderrichtung erstreckender Aufnahmeabteile, die zum Aufnehmen einer Vielzahl von Beuteln bemessen sind. Die Beutel kommen in einem fortlaufenden Strom an und werden taktweise und stehend in die Aufnahmeabteile eingefördert, wodurch der Kreisförderer nur taktweise betrieben werden kann. An der ersten Schnittstelle der Förderrichtungen von Kreisförderer und Zufuhrförderer wird jede zweite Aufnahmekammer in die Umverpackung entladen, während die noch beladenen Aufnahmeabteile zur zweiten Entladestelle an der zweiten Schnittstelle zwischen den Förderrichtungen des Kreisförderers und des Zufuhrförderers weitertransportiert werden. Da derartige Beutel, beispielsweise Getränkebeutel mit Standboden, in Massen produziert und verpackt werden müssen, wirken sich auch kleinste Verzögerungen in der Transportgeschwindigkeit nachteilig auf die Wirtschaftlichkeit aus. Es wurde festgestellt, dass die bekannte Vorrichtung noch weiter optimierbar ist.

Der Erfindung liegt demnach die Aufgabe zugrunde, eine Vorrichtung zum Einbringen einer Mehrzahl von Beuteln in eine Umverpackung bereitzustellen, die im Hinblick auf Fördergeschwindigkeit noch weiter optimiert ist.

Die Aufgabe wird durch die im Anspruch 1 angegebenen Merkmale gelöst.

Durch die erfindungsgemäße Verwendung eines Sternförderers wird der Förderfluss der Beutel und anschließend der Förderfluss der mit Beuteln zu füllenden Umverpackung kontinuierlich aufrechterhalten, d.h. eine taktweise Förderung ist nicht mehr notwendig. Dadurch werden die damit verbundenen Verzögerungen vermieden, was zu einer weiteren Erhöhung der Fördergeschwindigkeit führt. Zwar ist eine kontinuierliche Förderung von Beuteln in eine Umverpackung bereits aus der EP 696 538 B1 beschrieben, dort wird jedoch ein Linearförderer mit einem Ober- und einem Untergurt verwendet, der die Beutel zweiseitig auf ihrem Weg in Richtung auf die Umverpackung festhält. Darüber hinaus ist es bei der bekannten Vorrichtung notwendig, die Beutel vor dem Einbringen in die Umverpackung schuppenförmig anzuordnen. Beide Maßnahmen sind jedoch nur für Beutel mit einer im wesentlichen regelmäßigen Gestalt geeignet. Standbodenbeutel, wie sie bevorzugt mit der erfindungsgemäßen Vorrichtung verarbeitet werden sollen, laufen jedoch von ihrem breiten Standboden in Richtung auf die gegenüberliegende Kante spitz zu, so dass sie weder mit Ober- und Untergurt noch schuppenförmig gefördert werden können.

Durch die erfindungsgemäße Verwendung eines Sternförderers mit Aufnahmeabteilen, der sich um eine horizontale Achse dreht und umfangsseitig beladen und entladen werden kann, können auch unregelmäßig geformte Beutel in einem gleichmäßigen Fluss der Umverpackung zugeführt werden.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine schematische, perspektivische Darstellung der erfindungsgemäßen Vorrichtung, und
- Fig. 2: eine schematische Darstellung eines Sternförderers in Seitenansicht.

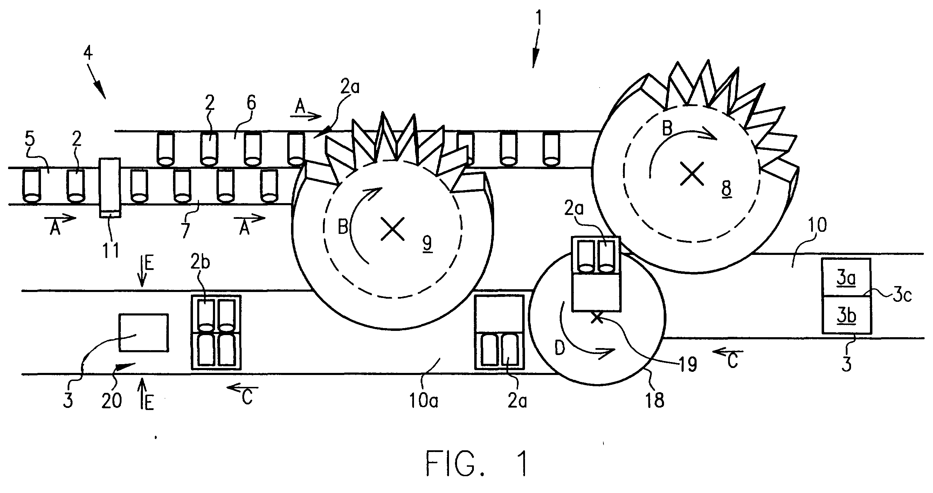

Fig. 1 zeigt eine erfindungsgemäße Vorrichtung zum Einbringen einer Mehrzahl von Beutel 2 in eine Umverpackung 3. Die Beutel 2 sind Standbodenbeutel aus Folienmaterial mit einem Standboden an einer Seite und einer die Einfüllöffnung verschließenden Schweißnaht an der gegenüberliegenden Seite und einem kissenförmig gekrümmten Umfang an den restlichen Seiten, wie sie zum Verpacken von Getränken üblich sind. Die Beutel 2 werden in nichtgezeigter, üblicher Weise gefüllt, verschlossen und gegebenenfalls mit einem Trinkhalm versehen.

Die Umverpackung 3 ist eine der üblichen Klappverpackungen mit einem ersten Abteil 3a zum Aufnehmen eines ersten Satzes 2a der Beutel 2 und einem zweiten Abteil 3b zum Aufnehmen eines zweiten Satzes an Beuteln 2b, sowie einem Klappfalz 3c, um den die beiden Abteile 3a und 3b zum Ausbilden einer allseitig geschlossenen Umverpackung 3 (Fig. 1 links unten) geklappt werden können.

Die Vorrichtung 1 enthält einen Beutelförderer 4 mit einem Lieferförderer 5 und zwei Teilförderern 6 und 7 zum Fördern liegender Beutel 2, zwei Sternförderer 8 und 9, wobei jedem Teilförderer 6 und 7 jeweils ein Sternrad 8 und 9 zugeordnet ist, sowie einen Zufuhrförderer 10 für die Umverpackungen 3.

Der Lieferförderer 5 fördert eine fortlaufende Reihe von Beuteln 2, die in gleicher Ausrichtung, Standboden nach rechts in Fig. 1, liegend auf dem Lieferförderer 5 angeordnet sind, in Richtung des Pfeiles A zu einer Verteileinrichtung 11, beispielsweise einem Schieber od. dgl., der jeden zweiten Beutel 2 unter Beibehaltung seiner Ausrichtung auf den ersten Teilförderer 6 übergibt, und die übrigen Beutel auf den zweiten Teilförderer 7 belässt. Der zweite Teilförderer 7 ist entweder eine Verlängerung des Lieferförderers 5 oder ein gesondertes Förderband. Beide Teilförderer 6 und 7 bewegen sich in Richtung des Pfeiles A weiter zu ihrem jeweils zugeordneten Sternförderer 8 und 9, die in Richtung des Pfeiles A gestaffelt hintereinander angeordnet sind.

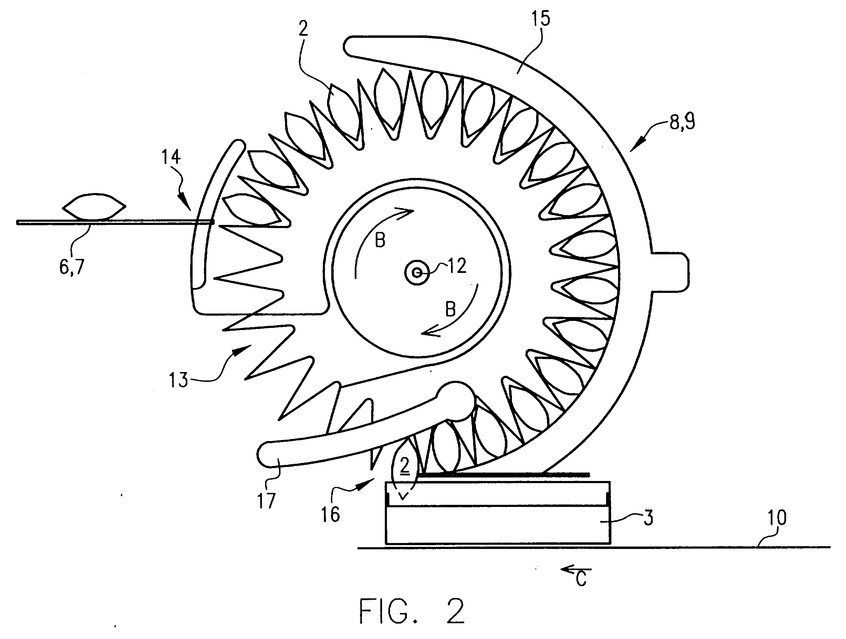

Wie Fig. 2 zeigt, ist jeder Sternförderer 8, 9 um eine horizontale und quer zur Förderrichtung A verlaufende Achse 12 in Richtung B drehbar gelagert. Jeder Sternförderer ist an seinem Umfang mit einer Vielzahl in Richtung B hintereinanderliegender, durch Trennwände mit im wesentlichen dreieckigen Querschnitt gebildete Aufnahmeabteile 13 versehen, die in Richtung B so bemessen sind, dass sie nur einen einzigen Beutel in Förderrichtung aufnehmen können. In Richtung der Achse 12 können die Abteile jedoch ohne weiteres so bemessen werden, dass sie zwei oder noch mehr Beutel gleichzeitig aufnehmen können, wobei dann natürlich die entsprechende Anzahl Teilförderer bzw. ein entsprechend breiter Teilförderer vorgesehen werden muss. Die als Förderbänder ausgebildeten Teilförderer 6, 7 treffen auf den Sternförderer 8, 9 an einer Beladestelle 14, die mindestens in Höhe der Achse 12, bevorzugt jedoch etwas höher liegt. Die Drehgeschwindigkeit der Sternförderer 8, 9 ist so auf die Fördergeschwindigkeit der Teilförderer 6, 7 abgestimmt, dass jedes der an der Beladestelle 14 vorbeilaufende Abteil 13 mit jeweils einem Beutel beladen wird, wobei der Beutel durch den Teilförderer 6, 7 in das jeweilige Abteil 13 hinein geschoben wird und dabei die Teilförderer entleert werden. Die gefüllten Aufnahmeabteile 13 bewegen sich in Richtung B zunächst nach oben und anschließend nach unten, wobei sie bei ihrer Bewegung an einer stationären Abdeckung 15 vorbeigeführt werden, die die Abteile so abdeckt, dass die nur lose in den Abteilen 13 liegenden Beutel nicht vorzeitig herausfallen können. In der Nähe oder am tiefsten Förderpunkt des Sternförderers 8, 9 ist die Abdeckung 15 beendet oder weist eine Lücke auf, so dass eine Einbringstelle 16 gebildet wird, an der die Beutel 2 in die vom Zufuhrförderer 10 unter den Sternförderer 8, 9 geschobene Umverpackung 3 fallen. Die Umverpackung 3 bewegt sich in Förderrichtung C an der Einbringstelle 16 gleichsinnig und mit einer angepassten Geschwindigkeit wie die Beutel 2 in Förderrichtung B, so dass die Beutel 2 in die entsprechenden Abteile 3a, 3b dicht gepackt eingebracht werden können. Das Lösen der Beutel 2 aus den Aufnahmeabteilen 13 im optimalen Zeitpunkt wird durch eine Entladeführung 17 unterstützt, an der die Beutel 2 anschlagen, und die die Beutel 2 in die Umverpackung 3 dirigiert.

Wie in Fig. 1 ersichtlich, wird zunächst in das erste Abteil 3a der auf dem Zufuhrförderer 10 angelieferten Verpackung 3 durch den Sternförderer 8 ein erster Satz 2a von Beuteln eingebracht, die aus der sich auf dem ersten Teilförderer 6 befindenden Reihe der Beutel 2 stammen. Ist dies geschehen, so bringt der Zufuhrförderer 10 die halb gefüllte Umverpackung 3 zu einer Dreheinrichtung 18, beispielsweise einem Drehteller, die in Richtung des Pfeiles D um eine senkrechte Achse 19 drehbar ist. Die Dreh-Einrichtung 18 dreht die halbgefüllte Umverpackung 3 um die senkrechte Achse 19 um 180° und übergibt die so gedrehte Umverpackung 3 einem zweiten Bereich 10a des Zufuhrförderers 10, der die halbgefüllte Umverpackung 3 nunmehr der Einbringstelle 16 am zweiten Sternförderer 9 so zuführt, dass der zweite Satz 2b der Beutel, der aus der auf dem zweiten Teilförderer 7 angelieferten Reihe der Beutel stammt, in das zweite Abteil 3b der Umverpackung eingebracht werden kann. Durch die Drehung auf der Dreheinrichtung haben die beiden Sätze 2a, 2b in der Umverpackung 3 eine einander entgegengerichtete Ausrichtung, wobei bevorzugt die Standböden zum Falz 3c weisen, obwohl die Beutel in identischer Ausrichtung angeliefert wurden. Ist auch der zweite Satz 2b in die Umverpackung 3 eingebracht, so verlässt die gefüllte Umverpackung den Bereich des Sternförderers 9 und gelangt in eine übliche Klappvorrichtung 20, die lediglich durch die zum Zusammenklappen der Umverpackung 3 notwendigen Kräfte dargestellt ist, und verlässt, gegebenenfalls nach einem zusätzlichen Befestigungsschritt der beiden Abteile aneinander, die Vorrichtung 1.

In Abwandlung des beschriebenen und gezeichneten Ausführungsbeispieles kann die erfindungsgemäße Vorrichtung auch zum Verpacken von Beuteln aus einer einzigen Reihe in einen einzigen Satz bzw., durch Weglassen der Dreheinrichtung, zum Verpacken zweier identisch ausgerichteter Sätze von Beuteln verwendet werden. Die Trennwände der Aufnahmeabteile des Sternförderers können in Förderrichtung nach vom leicht abgebogene Spitzen aufweisen. Obwohl die erfindungsgemäße Vorrichtung ihre speziellen Vorteile bei der Handhabung von Standbeuteln aus Folienmaterial mit ihren unterschiedlichen Dicken an ihren beiden Enden entfaltet, können ohne weiteres auch symmetrisch geformte Beutel gehandhabt werden. Auch bei diesen Beuteln wird durch den kontinuierlichen, nicht durch ein taktweises Vorrücken unterbrochenen Förderfluss eine Beschleunigung des gesamten Fördervorganges erreicht.

## Patentansprüche

1. Vorrichtung zum Einbringen einer Mehrzahl von Beuteln, insbesondere von mit einem Getränk gefüllten Standbodenbeuteln, in eine Umverpackung, mit einem Beutelförderer und einem Zufuhrförderer für die Umverpackung, wobei die Beutel an einer sich oberhalb des Zufuhrförderers befindenden Einbringstelle unter Schwerkrafteinfluss in die Umverpackung einbringbar sind, **dadurch gekennzeichnet**, dass der Beutelförderer (4) einen sich um eine im wesentlichen horizontale Achse (12) drehbaren Sternförderer (8, 9) aufweist, der mit umfangsseitig be- und entladbaren, sowie in Förderrichtung nur einen einzelnen Beutel (2) aufnehmenden Aufnahmeabteilen (13) versehen und oberhalb des Zufuhrförderers (10) an der Einbringstelle (16) die gleiche Förderrichtung (B, C) wie der Zufuhrförderer (10) aufweist.

2. Vorrichtung nach Anspruch 1, **dadurch gekennzeichnet**, dass der Sternförderer (8, 9) und der Zufuhrförderer (10) so angetrieben sind, dass sie sich an der Einbringstelle (16) mit einer angepassten Geschwindigkeit bewegen.

3. Vorrichtung nach Anspruch 1 oder 2, **dadurch gekennzeichnet**, dass die Beutel (2) lose in den Aufnahmeabteilen (13) liegen und die Aufnahmeabteile (13) durch eine stationäre Abdeckung (15) verschließbar sind, die sich zwischen einer Beladestelle (14) und der Einbringstelle (16) erstreckt.

4. Vorrichtung nach einem der Ansprüche 1 bis 3, **dadurch gekennzeichnet**, dass an der Einbringstelle (16) eine in die Aufnahmeabteile (13) ragende Entladeführung (17) vorgesehen ist.

5. Vorrichtung nach Anspruch 3 oder 4, **dadurch gekennzeichnet**, dass die Beladestelle (14) des Sternförderers (8, 9) in Höhe oder oberhalb seiner Drehachse (12) liegt.

6. Vorrichtung nach einem der Ansprüche 1 bis 5, **dadurch gekennzeichnet**, dass der Beutelförderer (4) einen ersten Teilförderer (6) und einen ersten Sternförderer (8) für Beutel (2) eines ersten Satzes (2a), sowie einen zweiten Teilförderer (7) und einen zweiten Sternförderer (9) für Beutel eines zweiten Satzes (2b) enthält und der Zufuhrförderer (10) für die Umverpackung (3) mit beiden Sternförderern (8, 9) in Verbindung steht.

7. Vorrichtung nach Anspruch 6, **dadurch gekennzeichnet**, dass der zweite Sternförderer (9) in Förderrichtung (C) des Zufuhrförderers (10) hinter dem ersten Sternförderer (8) angeordnet ist.

8. Vorrichtung nach Anspruch 6 oder 7, **dadurch gekennzeichnet**, dass der Beutelförderer (4) eine Lieferstrecke (5) zum Zuführen einer fortlaufenden Reihe von Beuteln (2) und eine Verteileinrichtung (11) zum Verteilen der Beutel (2) auf die Teilförderer (6, 7) enthält.

9. Vorrichtung nach einem der Ansprüche 6 bis 8, **dadurch gekennzeichnet**, dass der Zufuhrförderer (10) zum Einbringen eines ersten Satzes (2a) von Beuteln in einen ersten Bereich (3a) der Umverpackung (3) und eines zweiten Satzes (2b) der Beutel in einer anderen Ausrichtung in einen zweiten Bereich (3b) der gleichen Umverpackung (3) zwischen der Einbringstelle (16) des ersten Sternförderers (8) und der des zweiten Sternförderers (9) eine Dreheinrichtung (18) zum Drehen der Umverpackung (3) enthalt.

10. Vorrichtung nach einem der Ansprüche 1 bis 9, **gekennzeichnet durch** die Verwendung zum Handhaben von Standbodenbeuteln (2), wobei die Beutel (2) auf dem Beutelförderer (4) und dem Sternförderer (8, 9) liegend transportierbar sind, und die Standböden aller Beutel in die gleiche Richtung und quer zur Förderrichtung weisen.

11. Verfahren zum Betreiben der Vorrichtung nach einem der Ansprüche 1 bis 10, zum Einbringen eines ersten und eines zweiten Satzes von mit einem Getränk gefüllten Standbodenbeuteln durch Schwerkrafteinfluss in eine gemeinsame Umverpackung, **dadurch gekennzeichnet**, dass die Standbodenbeutel liegend transportiert und in einen ersten und einen zweiten Teilstrom geteilt werden, die beiden Teilströme jeweils einem um eine horizontale Achse drehbaren Sternförderer zugeführt werden, der Sternförderer des ersten Teilstroms die Beutel des ersten Satzes nacheinander in die Umverpackung einbringt und anschließend der Sternförderer des zweiten Teilstroms die Beutel des zweiten Satzes nacheinander in die Umverpackung einbringt.

12. Verfahren nach Anspruch 11, **dadurch gekennzeichnet**, dass die Umverpackung zwischen dem Einbringen des ersten und dem Einbringen des zweiten Satzes gedreht wird.
